# FASCICULE DE BREVET EUROPEEN

(11) **EP 0 488 847 B1**
(45) Date de publication et mention de la délivrance du brevet: **02.03.1994**
(21) Numéro de dépôt: 91403039.0
(22) Date de dépôt: 13.11.1991
(51) Int. Cl.: B62D 1/16, F16C 33/20

(54) **Palier lisse souple et son application aux directions d'automobile**
Elastisches Gleitlager und seine Verwendung für Automobillenkungen
Flexible sliding contact bearing and its application on motor vehicle steerings

(30) Priorité: 28.11.1990 FR 9014891
(43) Date de publication de la demande: 03.06.1992
(73) Titulaire: ECIA - EQUIPEMENTS ET COMPOSANTS POUR L'INDUSTRIE AUTOMOBILE, F-25400 Audincourt (FR)
(72) Inventeur: Renard, Henri Jean André, F-25230 Seloncourt (FR)
(74) Mandataire: Mestre, Jean (FR)

(56) Documents cités:
- FR-A- 2 537 674
- GB-A- 2 004 956
- US-A- 4 415 166
- US-A- 4 603 982
- US-A- 4 854 745

## Description

La présente invention concerne les paliers lisses souples destinés à assurer la liaison entre un arbre et un support de manière que seul un degré de liberté en rotation relative entre arbre et support soit possible; l'invention vise aussi l'application d'un tel palier aux colonnes de direction d'automobile notamment.

Dans de nombreux secteurs industriels il est nécessaire de pouvoir monter un arbre sur au moins un support de manière que ces arbre et support ne puissent que tourner en rotation relative suivant leur axe commun sans pouvoir pour autant se déplacer en translation selon cet axe.

Une telle situation se rencontre par exemple dans l'industrie automobile pour le montage des colonnes de direction.

Comme on le sait, classiquement, une colonne de direction se compose d'un support, douille ou tube de colonne qui est fixé au poste de conduite du véhicule par l'intermédiaire de ferrures, pattes ou analogues. Une telle colonne de direction se compose aussi d'un arbre proprement dit qui, par l'intermédiaire du volant, transmet les instructions du conducteur aux roues directrices du véhicule par l'entremise d'un boîtier de direction et d'une timonerie. Cet arbre est monté, au moins partiellement, dans ce support, douille ou tube à l'aide de roulements, le plus souvent à rouleaux, de manière à n'autoriser qu'un seul degré de liberté de rotation relative selon l'axe commun de l'arbre et de ce support, douille ou tube, à l'exclusion de tout autre degré de liberté telle qu'une translation axiale.

Un tel sous-ensemble qui participe activement à la sécurité doit être fiable, satisfaire à des normes strictes et parfois apparemment contradictoires tout en restant d'un coût modique.

Une telle colonne direction doit être par exemple :
- exempte de tout jeu, sans le moindre serrage empêchant les déplacements,
- autoriser une rotation avec un couple qui n'excède pas 0,2 Nm,
- avoir une longévité à l'usure qui traditionnellement correspond au moins à la durée de vie moyenne escomptée du véhicule,
- résister aux contraintes de compression radiale qui peuvent se manifester lors d'une tentative d'effraction alors que l'anti-vol est enclenché, sous l'action d'un couple de 250 Nm,
- résister de par sa raideur à un moment fléchissant résultant d'un effort appliqué radialement sur le volant de l'ordre de 1 kN/mm,
- résister à toute translation longitudinale de l'arbre par rapport au support, par glissement.

Cette brève énumération, non exhaustive, illustre combien il est difficile de satisfaire à l'ensemble de toutes ces prescriptions techniques compte-tenu des impératifs économiques auxquels il faut faire face.

Une solution habituellement utilisée pour résoudre ce type de difficulté consiste à se servir de paliers à billes ou à rouleaux très particuliers, qui sont très différents des roulements à pistes circulaires, coniques ou sphériques. En effet, les roulements utilisés pour ce type d'application ont par exemple des pistes polygonales souvent triangulaires. Ces roulements permettent de compenser les variations des cotes résultant des tolérances de fabrication entre support, tube ou douille et arbre, tout en s'assurant de l'absence totale de jeu, comme rappelé précédemment.

Un autre état de la technique est illustré par le document US-4 603 982. Le palier objet de ce document qui est destiné à supporter de petites charges comprend une bague extérieure en deux parties symétriques qui délimitent un chenal intérieur et une bague intérieure qui porte des prolongements radiaux sphériques engagés dans ce chenal. Une telle solution n'est pas apte à satisfaire à l'ensemble des prescriptions évoquées brièvement précédemment.

Le but de l'invention est de produire un palier lisse souple pour monter un arbre sur un support de manière que seul un degré de liberté en rotation relative entre arbre et support soit possible et qui, bien que d'un coût de fabrication et de montage modique, permette de satisfaire à la plupart des prescriptions techniques qui ont été mentionnées auparavant.

L'invention a pour objet un palier lisse souple pour monter un arbre sur un support de manière que seul un degré de liberté en rotation relative entre arbre et support soit possible, et qui est constitué essentiellement d'une bague extérieure et d'une bague intérieure engagée dans celle-ci. Ce palier du type général de celui du document précité et énoncé dans le préambule de la revendication 1 présente les particularités distinctives exposées notamment dans la partie caractérisante de cette revendication.

L'invention a aussi pour objet l'application d'un tel palier à une colonne de direction d'automobile.

D'autres caractéristiques de l'invention ressortiront de la lecture de la description et des revendications qui suivent, ainsi que de l'examen du dessin annexé, donné seulement à titre d'exemple, où :
- la Figure 1 est une coupe méridienne schématique d'un mode de réalisation d'un palier lisse souple selon l'invention dans son application à une colonne de direction;
- la Figure 2 est une vue perspective éclatée de ce mode de réalisation d'un palier lisse souple selon l'invention; et
- les autres Figures 3 à 11 sont des vues en élévation avec coupe partielle, d'autres variantes d'exécution de réalisations d'un palier souple lisse selon l'invention.

Les paliers lisses souples de même que les colonnes de direction d'automobiles étant bien connus dans la technique, on ne décrira dans ce qui suit que ce qui concerne directement ou indirectement l'invention. Pour le surplus, le spécialiste de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira d'abord chacun des constituants de l'invention avant d'en exposer l'assemblage et le fonctionnement.

On exposera les particularités d'un palier lisse souple selon l'invention dans son application particulière à une colonne de direction d'automobile mais il est clair que le palier lisse selon l'invention trouve d'autres applications.

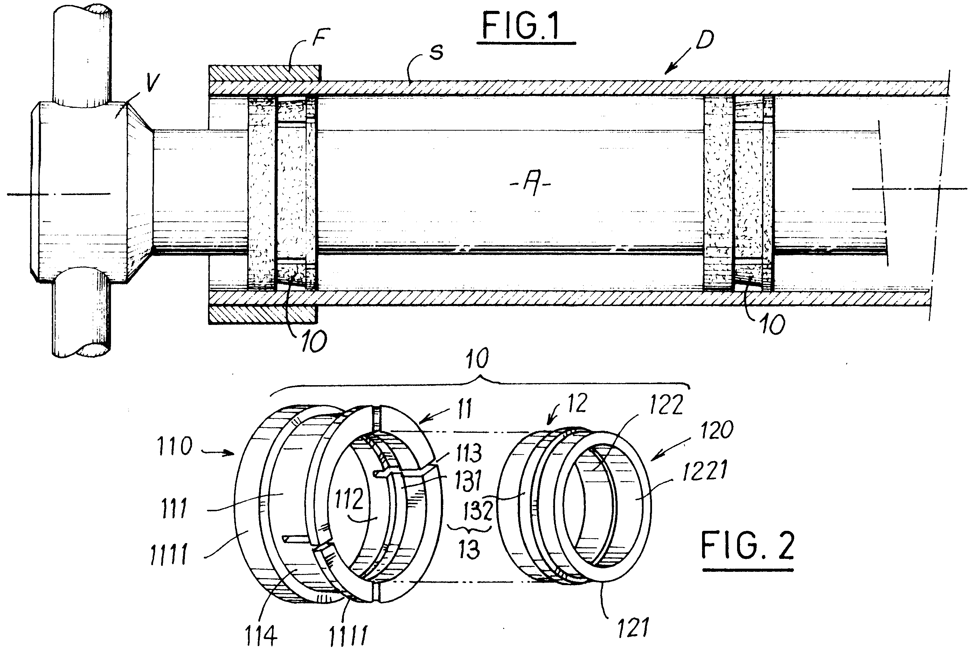

Comme on le voit sur la Figure 1, une colonne de direction D d'automobile se compose essentiellement d'un support S et d'un arbre A coaxiaux. Le support S qui se présente à la manière d'une douille ou d'un tube est fixé à une structure ou coque non représentée d'un poste de pilotage à l'aide de ferrures F ou analogues. Un volant V, fixé à l'une des extrémités de l'arbre A, est destiné à le faire tourner selon l'axe X-X commun, sans que pour autant cet arbre puisse coulisser par translation selon cet axe.

Pour parvenir à ceci, on interpose entre arbre et support au moins un palier lisse souple selon l'invention. Comme on le voit, ce palier 10 est constitué d'une bague extérieure 11 dans laquelle est engagée au moins partiellement une bague intérieure 12.

Comme on le voit, la bague 11 extérieure est faite d'un fourreau 110 qui est délimité par une paroi externe 111 et par une paroi interne 112. A proximité de l'une au moins des extrémités de ce fourreau 110, la paroi externe 111 porte un manchon 1111 en saillie.

La bague 12 intérieure est faite d'un fourreau 120 qui est délimité par une paroi externe 121 et une paroi interne 122. Le fourreau 120 porte à proximité de l'une au moins de ses extrémités et sur sa paroi interne 122 un manchon 1221 en saillie.

Une liaison 13, située à l'écart de l'aplomb des manchons 1111 et 1221 permet de réunir les bagues 11 et 12 de manière à interdire toute translation relative selon l'axe X-X mais tout en autorisant seulement une rotation relative entre elles. Cette liaison 13 est faite d'un élément femelle 131 porté par l'une des parois 112, 121 en regard de chacune des bagues 11 et 12, et est aussi faite d'un élément mâle 132 porté par l'autre de ces parois 112, 121 en regard des bagues 11 et 12. Ces éléments mâle et femelle 132 et 131 sont accouplés l'un à l'autre par engagement mutuel de préférence élastique, comme on le comprendra par la suite.

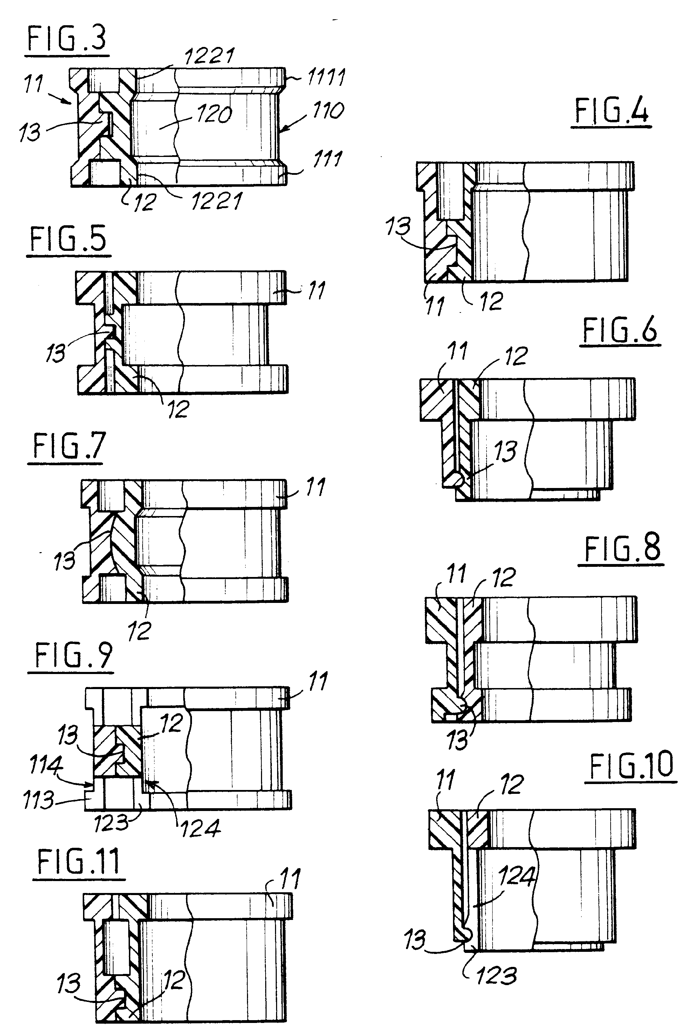

Comme on peut l'observer sur les diverses figures du dessin, la section droite méridienne des éléments mâle et femelle 132 et 131 de la liaison 13 est anguleuse, approximativement en grecque (Figures 3, 4, 5, 9, 11) ou bien est courbe de préférence en arc de cercle (Figures 6, 8, 10) ou bien est sphérique (Figure 7).

S'il y a lieu l'un au moins des fourreaux 110, 120 est pourvu de fentes 113, 123 respectivement. Ces fentes qui par exemple débouchent à l'une des extrémités d'un fourreau, délimitent entre elles des languettes 114, 124 respectivement. Comme on peut l'observer, la liaison 13 et en particulier ses éléments femelle 131 et/ou mâle 132, sont portés pour partie au moins par ces languettes 114, 124.

Comme on peut l'observer, selon les modes de réalisation et les variantes d'exécution, l'élément mâle 132 est porté par la paroi interne 112 de la bague extérieure 11 alors que l'élément femelle 131 est porté par la paroi interne 122 de la bague intérieure 12. Il est clair que la solution inverse peut être retenue, c'est-à-dire que l'élément mâle 132 est porté par la paroi externe 121 de la bague intérieure 12 et l'élément femelle 131 est alors porté par la paroi interne 112 de la bague extérieure 11, comme illustré sur la Figure 7.

Les bagues extérieure 11 et intérieure 12 du palier 10 selon l'invention sont assemblées et montées comme illustré en particulier sur la Figure 1; comme on peut le comprendre le manchon 1221 en saillie sur la paroi interne 122 du fourreau 120 de la bague intérieure 12 assure le serrage sur l'arbre 1. De même, le manchon 1111 en saillie sur la paroi externe 111 du fourreau 110 de la bague extérieure 11 assure le serrage sur le support S, comme illustré sur la Figure 1.

Du fait de la position adoptée pour les éléments mâle et femelle 132 et 131, respectivement, de la liaison 13 à l'écart de l'aplomb des manchons 1111 et 1221 on observe que le guidage en rotation est absolument indépendant des efforts et des réactions qui se développent au niveau des manchons.

Grâce à cette solution, on obtient un palier lisse souple qui a une grande qualité de guidage en rotation, qui interdit pratiquement tout glissement longitudinal du fait des efforts importants développés au niveau des manchons, et une raideur radiale importante.

Le choix de l'élasticité des matériaux dont sont faites les bagues, et l'existence éventuelle de fentes qui y délimitent des languettes permettent d'obtenir une souplesse plus importante qui favorise le montage et/ou le fonctionnement.

De préférence, l'une au moins des bagues 11 et 12 est faite en un matériau synthétique et lorsqu'on utilise deux matériaux synthétiques, on choisit le couple de ceux-ci qui offre la souplesse, le coefficient de frottement et l'insensibilité au fluage, l'endurance, la résistance à l'usure,....recherchés.

Parmi les matériaux que l'on peut utiliser, on mentionnera notamment les polyacétals, les polypropylènes, les polyamides, les téréphtalates de polyéthylène-glycol.

S'il y a lieu, ces matériaux sont "chargés" d'au moins une substance lubrifiante choisie par exemple notamment parmi le graphite, le bisulfure de molybdène, le polytétrafluoréthylène, les silicones.

Les bagues d'un palier selon l'invention sont fabriquées par exemple par moulage par injection.

Comme on le comprend, l'assemblage des deux bagues d'un palier selon l'invention est fait de préférence préalablement par encastrement mutuel élastique avant leur mise en oeuvre; s'il y a lieu chacune de ces bagues peut d'abord être mise en place respectivement sur l'arbre et le support et ces bagues sont réunies ensuite.

On observera que ce qui est essentiel est l'absence de jeu et la très forte tenue longitudinale de chacune des bagues sur l'arbre et dans le support, respectivement.

De ce qui précède, on saisit immédiatement tout l'intérêt et les avantages apportés par un palier lisse souple selon l'invention.

## Revendications

1. Palier lisse souple pour monter coaxialement un arbre sur un support de manière que seul un degré de liberté en rotation relative entre arbre et support soit possible, ce palier (10) étant constitué d'une bague (11) extérieure qui est délimitée par une paroi externe (111) et une paroi interne (112), d'une bague (12) intérieure engagée dans cette bague extérieure (11) et faite d'un fourreau (120) qui est délimité par une paroi externe (121) et une paroi interne (122), et d'une liaison (13) pour réunir ces bagues (11,12) tout en autorisant seulement une rotation relative entre elles (11,12), ladite liaison (13) étant faite d'un élément femelle (131) porté par l'une de ces parois (112,121) en regard des bagues (11,12) et d'un élément mâle (132) porté par l'autre de ces parois (112,121) en regard des bagues (11,12), ces éléments mâle et femelle (132,121) étant accouplés l'un à l'autre par engagement mutuel, palier caractérisé en ce que la bague extérieure (11) est faite d'un fourreau (110) dont la paroi externe (111) porte à proximité de l'une au moins de ses extrémités un premier manchon (1111) en saillie, en ce que la paroi interne (122) du fourreau (120) constituant la bague (12) intérieure porte à proximité de l'une au moins de ses extrémités un second manchon (1221) en saillie et en ce que la liaison (13) est située à l'écart de l'aplomb des premier et second manchons (1111, 1221).

2. Palier selon la revendication 1, caractérisé en ce que la section droite de ces éléments mâle et femelle (132, 131) est anguleuse, notamment en grecque.

3. Palier selon la revendication 1, caractérisé en ce que la section droite de ces éléments mâle et femelle (132, 131) est courbe, de préférence en arc de cercle.

4. Palier selon la revendication 1, caractérisé en ce que la section droite de ces éléments mâle et femelle (132, 131) est sphérique.

5. Palier selon l'une quelconque des revendications 1 à 4, caractérisé en ce que l'un au moins des fourreaux (110, 120) peut être pourvu de fentes (113, 123) qui délimitent entre elles des languettes (114, 124) et en ce que cette liaison (13) est portée pour partie au moins par ces languettes (114, 124).

6. Palier selon l'une quelconque des revendications 1 à 5, caractérisé en ce que l'élément mâle (132) est porté par la paroi interne (112) de la bague extérieure (11) et l'élément femelle (131) est porté par la paroi externe (121) de la bague intérieure (12).

7. Palier selon l'une quelconque des revendications 1 à 5, caractérisé en ce que l'élément mâle (132) est porté par la paroi externe (121) de la bague intérieure (12) et l'élément femelle (131) est porté par la paroi interne (112) de la bague extérieure (11).

8. Palier selon l'une quelconque des revendications 1 à 7, caractérisé en ce que les bagues (11, 12) sont faites chacune en un matériau synthétique et en ce que le couple de ces deux matériaux synthétiques offre notamment souplesse, petit coefficient de frottement et insensibilité au fluage, endurance, résistance à l'usure.

9. Palier selon la revendication 8, caractérisé en ce que les matériaux sont choisis notamment parmi les polyacétals, les polypropylènes, les polyamides, les téréphtalates de polyéthylène glycol.

10. Palier selon la revendication 9, caractérisé en ce que les matériaux sont chargés d'au moins une substance lubrifiante choisie notamment parmi le graphite, le bisulfure de molybdène, le polytétrafluoréthylène, les silicones.

11. Application d'un palier selon l'une quelconque des revendications 1 à 10 à une colonne de direction de véhicule automobile terrestre.

## Patentansprüche

1. Elastisches Gleitlager zur koaxialen Anbringung einer Welle auf einem Träger so, daß nur ein Relativdrehungsfreiheitsgrad zwischen Welle und Träger möglich ist, wobei das Lager (10) durch einen Außenring (11), der durch eine Außenwand (111) und eine Innenwand (112) begrenzt ist, einen Innenring (12), der in diesen Außenring (11) eingesetzt und aus einer Gleithülse (120) gebildet ist, die durch eine Außenwand (121) und eine Innenwand (122) begrenzt ist, und eine Verbindung (13) zum Verbinden dieser Ringe (11, 12) unter Zulassung allein einer Relativdrehung zwischen ihnen (11, 12) gebildet ist, wobei die Verbindung (13) aus einem weiblichen Element (131), welches von der einen dieser den Ringen (11, 12) zugekehrten Wände (112, 121) getragen wird, und einem männlichen Element (132), welches von der anderen dieser den Ringen (11, 12) zugekehrten Wände (112, 121) getragen wird, aufgebaut ist, wobei diese männliche und weibliche Element (132, 121) durch wechselseitigen Eingriff miteinandsr gekoppelt sind, wobei das Lager dadurch gekennzeichnet ist, daß der Außenring (11) durch eine Gleithülse (110) gebildet ist, deren Außenwand (111) in der Nähe wenigstens des einen ihrer Enden eine vorspringende erste Manschette (1111) aufweist, daß die Innenwand (122) der den Innenring (12) bildenden Hülse (120) in der Nähe wenigstens des einen ihrer Enden eine vorspringende zweite Manschette (1221) aufweist, und daß die Verbindung (13) abgelegen vom Bereich der Ebene der erste und der zweiten Manschette (1111, 1221) angeordnet ist.

2. Lager nach Anspruch 1 dadurch gekennzeichnet, daß der Querschnitt dieser männlichen und weiblichen Elemente (132, 131) winkelig, insbesondere meanderförmig, ist.

3. Lager nach Anspruch 1, dadurch gekennzeichnet, daß der Querschnitt dieser männlichen und weiblichen Elemente (132, 131) gekrümmt, vorzugsweise kreisförmig, ist.

4. Lager nach Anspruch 1, dadurch gekennzeichnet, daß der Querschnitt dieser männlichen und weiblichen Elemente (132, 131) sphärisch ist.

5. Lager nach irgendeinem der Ansprüche 1 bis 4, dadurch gekennzeichnet, daß wenigstens die eine der Hülsen (110, 120) mit Schlitzen (113, 123) versehen sein kann, die zwischen sich Zungen (114, 124) begrenzen, und daß diese Verbindung (13) wenigstens teilweise von diesen Zungen (114, 124) getragen wird.

6. Lager nach irgendeinem der Ansprüche 1 bis 5, dadurch gekennzeichnet, daß das männliche Element (132), von der Innenwand (112) des Außenrings (11) und das weibliche Element (131) von der Außenwand (121) des Innenrings (12) getragen wird.

7. Lager nach irgendeinem der Ansprüche 1 bis 5 dadurch gekennzeichnet, daß das männliche Element (132) von der Außenwand (121) des Innenrings (12) und das weibliche Element (131) von der Innenwand (112) des Außenrings (11) getragen wird.

8. Lager nach irgendeinem der Ansprüche 1 bis 7, dadurch gekennzeichnet, daß die Ringe (11,12) jeweils aus einem Kunststoffmaterial hergestellt sind, und daß das Paar aus diesen beiden Kunststoffmaterialien insbesondere Weichelastizität, geringen Reibungskoeffizienten und Umempfindlichkeit gegenüber plastischem Fließen, Haltbarkeit, Verschleißfestigkeit bietet.

9. Lager nach Anspruch 8, dadurch gekennzeichnet, daß die Materialien insbesondere aus den Polyacetalen, Polypropylenen, Polyamiden, Polyethylenglykolterephtalaten ausgewählt sind.

10. Lager nach Anspruch 9 dadurch gekennzeichnet, daß die Materialien einen Anteil an wenigstens einem Schmierstoff, ausgewählt insbesondere aus Graphit, Molybdändisulfid, Polytetrafluorethylen, Silikonen, haben.

11. Verwendung eines Lagers nach irgendeinem der Ansprüche 1 bis 10 für eine Lenksäule eines terrestrischen Kraftfahrzeugs.

## Claims

1. Flexible plain bearing for mounting a shaft on a support coaxially in such a way that only one degree of freedom in relative rotation between shaft and support is possible, this bearing (10) being constituted by an outer ring (11) which is delimited by an outside wall (111) and an inside wall (112), by an inner ring (12) engaged in this outer ring (11) and made from a sleeve (120) which is delimited by an outside wall (121) and an inside wall (122) and by a link (13) in order to connect these rings (11, 12) while allowing only a relative rotation between them (11, 12), the said link (13) being made by a female element (131) carried by one of these facing walls (112, 121) of the rings (11, 12) and a male element (132) carried by the other of these facing walls (112, 121) of the rings (11, 12), these male and female elements (132, 121) being coupled to each other by mutuaI engagement, the bearing characterised in that the outer ring (11) is made from a sleeve (110) the outside wall (111) of which carries in proximity to at least one of its ends a first protruding bush (1111), in that the inside wall (122) of the sleeve (120) constituting the inner ring (12) carries in proximity to at least one of its ends a second protruding bush (1221) and in that the link (13) is located out of plumb with respect to the first and second bushes (1111, 1221).

2. Bearing according to Claim 1, characterised in that the cross-section of these male and female elements (132, 131) is angular, particularly in Greek key-pattern.

3. Bearing according to Claim 1, characterised in that the cross-section of these male and female elements (132, 131) is curved, preferably as an arc of a circle.

4. Bearing according to Claim 1, characterised in that the cross-section of these male and female elements (132, 131) is spherical.

5. Bearing according to any one of Claims 1 to 4, characterised in that at least one of the sleeves (110, 120) can be provided with slots (113, 123) which between them delimit tongues (114, 124) and in that this link (13) is at least partly carried by these tongues (114, 124).

6. Bearing according to any one of Claims 1 to 5, characterised in that the male element (132) is carried by the inside wall (112) of the outer ring (11) and the female element (131) is carried by the outside wall (121) of the inner ring (12).

7. Bearing according to any one of Claims 1 to 5, characterised in that the male element (132) is carried by the outside wall (121) of the inner ring (12) and the female element (131) is carried by the inside wall (112) of the outer ring (11).

8. Bearing according to any one of Claims 1 to 7, characterised in that the rings (11, 12) are each made from a synthetic material in that the pair of these synthetic materials in particular provides flexibility, a small coefficient of friction and lack of tendency to creep, endurance and resistance to wear.

9. Bearing according to Claim 8, characterised in that the materials are chosen in particular from polyacetals, polypropylenes, polyamides and polyethylene glycol terephthalates.

10. Bearing according to Claim 9, characterised in that the materials are loaded with at least one lubricating substance chosen from graphite, molybdenum disulphide, polytetrafluoroethylene and silicones in particular.

11. Application of a bearing according to any one of Claims 1 to 10 to a land motor vehicle steering column.
